# EUROPÄISCHE PATENTANMELDUNG

(11) **EP 4 186 343 A1**
(43) Veröffentlichungstag der Anmeldung: **31.05.2023**
(21) Anmeldenummer: 22209239.7
(22) Anmeldetag: 23.11.2022
(51) Int. Cl.: A01B 49/06, A01C 7/20, A01C 7/08, A01B 17/00

(54) **SÄHVORRICHTUNG**

(30) Priorität: 26.11.2021 LU 102881
(71) Anmelder: Kolb, Benedict, 85653 Aying (DE)
(72) Erfinder: Kolb, Benedict, 85653 Aying (DE)
(74) Vertreter: Paustian & Partner Patentanwälte mbB

(57) **Zusammenfassung**

Die Erfindung betrifft eine Sähvorrichtung (10) zum Anbau an einen Pflug (100), umfassend eine Nachbearbeitungseinheit (20), eine Säheinheit und Befestigungen (40). Die Säheinheit ist zumindest teilweise an der Nachbearbeitungseinheit montiert und die Nachbearbeitungseinheit ist beweglich mit den Befestigungen verbunden.

## Beschreibung

Die vorliegende Erfindung bezieht sich auf eine Sähvorrichtung. Genauer bezieht sich die vorliegende Anmeldung auf eine Sähvorrichtung als Anbaugerät für einen Pflug.

Die vorliegende Anmeldung hat es zur Aufgabe eine Sähvorrichtung, einen Pflug mit Sähvorrichtung und ein Bodenbearbeitungsverfahren bereit zu stellen, mit welchen eine einfache Aussaht direkt beim Pflügen erfolgen kann. Diese Aufgabe wird durch die beigefügten unabhängigen Ansprüche gelöst.

Nach einem Aspekt der vorliegenden Anmeldung umfasst eine Sähvorrichtung zum Anbau an einen Pflug eine Nachbearbeitungseinheit, eine Säheinheit und Befestigungen. Die Säheinheit ist zumindest teilweise an der Nachbearbeitungseinheit montiert und die Nachbearbeitungseinheit ist beweglich mit den Befestigungen verbunden.

Die Nachbearbeitungseinheit kann eines oder mehrere umfassen von Zinken, Scheiben, Rädern und Walzen. Gattungsgemäße Nachbearbeitungseinheiten sind den Pflugscharen nachlaufend. Sie haben z.B. die Aufgabe die umgepflügten Erdschollen zu zerkleinern und/oder den gepflügten Boden rückzuverfestigen. Die Sähvorrichtung kann z.B. für die Zwischenfruchtaussaat verwendet werden, da hier ein präzises Saatbild nicht im Vordergrund steht. Die Sähvorrichtung hat den Vorteil, dass die Bodenbearbeitung in nur einem Durchlauf abgeschlossen werden kann: Pflügen, Nachbearbeiten und Aussähen. Dies schont den Boden und reduziert den Kraftstoffverbrauch. Die Befestigungen können verstellbar sein, z.B. in ihrer Länge.

Nach einem Aspekt der vorliegenden Anmeldung umfasst die Säheinheit einer Sähvorrichtung zumindest einen Verteiler, welcher die Saat in den Bereich der Nachbearbeitungseinheit ausbringt. Beispielsweise wird die Saat nach den Pflugscharen und im Bereich der Nachbearbeitungseinheit ausgebracht. Da die Nachbearbeitungseinheit nochmals in die Bodenstruktur eingreift ist es vorteilhaft die Saat in diesem Bereich auszubringen, da hier zumindest ein Teil der Saat durch die Nachbearbeitungseinheit in den Boden eingearbeitet wird.

Nach einem Aspekt der vorliegenden Anmeldung umfasst die Säheinheit der Sähvorrichtung Verteiler, welche an der Nachbearbeitungseinheit angeordnet sind. Dabei kann es sich um Verteiler handeln, die das Saatgut gerichtet ausbringen, wie zum Beispiel Sähörner, Säscharren oder Säzinken. Es kann sich auch um Verteiler handeln, die das Saatgut ungerichtet ausbringen bzw. verteilen. Dies können ungerichtete Verteiler sein, die z.B. in 360° Saatgut rundum verteilen. Die Rundumverteilung kann durch Prallplatten eingeschränkt werden, sodass das Saatgut z.B. in Richtung von Pflugscharen verteilt wird und/oder Bereiche neben der Nachbearbeitungseinheit (z.B. außerhalb deren Bearbeitungsbereichs) von der Verteilung nicht erreicht werden können. Die Verteiler können in Bodenkontakt stehen oder ohne Bodenkontakt verteilen. Dies ist vorteilhaft, da somit das Saatbild und die Einarbeitung des Saatgutes in den Boden verbessert und angepasst werden kann.

Nach einem Aspekt der vorliegenden Anmeldung umfasst die Säheinheit einer Sähvorrichtung eine Datenschnittstelle. Dies ist vorteilhaft, da so die Säheinheit z.B. von einem Traktor ferngesteuert werden kann. Auch ist es möglich die Säheinrichtung mit GPS-basierten Daten z. B. zur Aussaatmenge zu steuern.

Nach einem Aspekt der vorliegenden Anmeldung umfasst die Säheinheit einer Sähvorrichtung einen Behälter, welcher an der Nachbearbeitungseinheit oder an zumindest einer der Befestigungen angeordnet ist. Dies ist vorteilhaft, da so die Sähvorrichtung kompakt gestaltet werden kann und z.B. keine Überleitungen vom Traktor auf die Sähvorrichtung vorgesehen werden müssen.

Nach einem Aspekt der vorliegenden Anmeldung umfasst die Nachbearbeitungseinheit einer Sähvorrichtung eine Recheneinheit. Die Recheneinheit weist mehrere Zinken auf, die von der Recheneinheit abstehen. Die Recheneinheit ist beweglich mit den Befestigungen verbunden. Mit den Zinken kann die Nachbearbeitungseinheit die durch das Pflügen erlangte Bodenstruktur zu verändern (z.B. Bodenschollen zerkleinern). Dies ist vorteilhaft für die Qualität der Bodenbearbeitung und Saateinbringung.

Nach einem Aspekt der vorliegenden Anmeldung ist zumindest eine Befestigung längenverstellbar. Dies ist vorteilhaft, da somit eine Ausladung der Sähvorrichtung veränderlich ist.

Nach einem Aspekt der vorliegenden Anmeldung umfasst ein Pflug eine Sähvorrichtung wie oben beschrieben.

Nach einem Aspekt der vorliegenden Anmeldung ist bei einem Pflug die Nachbearbeitungseinheit nachlaufend zu Pflugscharen angeordnet. Dies ist vorteilhaft für die Qualität der Bodenbearbeitung und Saateinbringung.

Nach einem Aspekt der vorliegenden Anmeldung ist die Nachbearbeitungseinheit eines Pflugs dazu vorgesehen und geeignet beim Drehen des Pfluges über die Pflugscharen oder zusammen mit dem Pflug zu schwenken. Bei Wendepflügen ist dies vorteilhaft, da die Sähvorrichtung über die Pflugscharen schwenken kann und nicht einschränkend für den Ablauf ist bzw. keinerlei Zusatzaufwand für z.B. Montage bzw. Demontage verursacht. Auch ist es vorteilhaft, wenn die Sähvorrichtung mit dem Pflug schwenken bzw. drehen kann, da somit der Pflug mit Sähvorrichtung in z.B. eine Transportstellung gebracht und nach oben geschwenkt werden kann, wenn der Pflug gedreht wird.

Nach einem Aspekt der vorliegenden Anmeldung ist bei einem Pflug ein Behälter am Pflugrahmen angeordnet. Mit dem Pflugrahmen ist der längliche Teil eines Pfluges gemeint, an den (ggf. unter Zwischenschaltung weiterer Teile) die Pflugscharen befestigt werden. Der Pflugrahmen kann einen Drehkopf umfassen, an welchen der Behälter auch befestigt sein kann. Dies ist vorteilhaft, da das Gewicht des Behälters günstig angeordnet werden kann.

Nach einem Aspekt der vorliegenden Anmeldung ist bei einem Pflug die Nachbearbeitungseinheit zu den Pflugscharen ausgerichtet. Dies kann eine parallele Ausrichtung zum Pflugrahmen sein, wobei parallel im weiteren Sinne zu verstehen ist, da es vorteilhaft sein kann die Nachbearbeitungseinheit nicht mit einem gleichbleibenden Abstand zu den Pflugscharen auszurichten, sondern mit einer Abweichung.

Nach einem Aspekt der vorliegenden Anmeldung wird ein Bodenbearbeitungsverfahren mit einem Pflug offenbart, wobei in einem Durchlauf der Boden gepflügt wird, nachbearbeitet wird und im Bereich der Nachbearbeitung Saat auf den Boden eingebracht wird. Dies bedeutet, dass bei einem Durchlauf, z.B. Überfahrt mit einem Traktor, die zuvor genannten Schritte durchgeführt werden und damit z.B. ein Feld nur einmal befahren werden muss. Dies ist vorteilhaft, weil es den Boden und die Umwelt schont. Beispielsweise kann eine Zwischenfruchtaussaat ausgebracht werden.

Nach einem Aspekt der vorliegenden Anmeldung wird ein Bodenbearbeitungsverfahren offenbart, wobei die Nachbearbeitung eine Rückverfestigung umfasst. Dies kann den Vorteil haben, dass die ausgebrachte Saat zumindest teilweise in den Boden eingearbeitet wird.

Nach einem Aspekt der vorliegenden Anmeldung kann die Aussaat ungerichtet über Verteiler erfolgen, die im Bereich der Nachbearbeitung angeordnet sind. Ein Vorrat an Saatgut kann ebenso im Bereich der Nachbearbeitung angeordnet sein. Dies kann den Vorteil haben, dass das Verfahren einfach umzusetzen ist und ein gutes Ergebnis liefert.

Zum besseren Verständnis der Erfindung wird diese anhand der nachfolgenden Figuren näher erläutert. Es zeigen jeweils in stark vereinfachter, schematischer Darstellung:
Fig. 1 eine Draufsicht auf einen Pflug mit Sähvorrichtung nach einem Ausführungsbeispiel.
Fig. 2 eine Seitenansicht des Pflugs aus Fig. 1.

Einführend sei festgehalten, dass in den unterschiedlich beschriebenen Figuren gleiche Teile mit gleichen Bezugszeichen bzw. gleichen Bauteilbezeichnungen versehen werden, wobei die in der gesamten Beschreibung enthaltenen Offenbarungen sinngemäß auf (funktions-)gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen bzw. auf einem Pflug auf einer horizontalen Ebene stehend und sind diese Lageangaben bei einer Lageänderung sinngemäß auf die neue Lage zu übertragen. Im Hinblick auf die lediglich schematische Darstellung können hieraus keine Größenmaßstäbe oder -verhältnisse abgeleitet werden. Das offenbarte Verfahren wird in Zusammenhang mit der nachfolgenden Vorrichtungsbeschreibung gegeben.

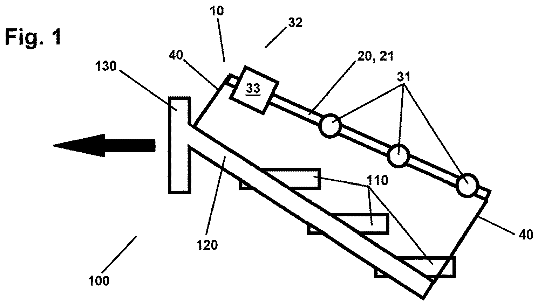

Anfänglich wird Bezug genommen auf Fig. 1, welche einen Pflug 100 mit einer Sähvorrichtung 10 in einer schematischen und stark vereinfachten Draufsicht zeigt (der Boden -nicht eingezeichnet- wäre parallel zur Blattebene). Der Pflug 100 umfasst eine Aufnahme 130 mit welcher der Pflug 100 z.B. an einen Traktor (nicht gezeigt) auf gattungsgemäße Weise befestigt werden kann (damit ist die Arbeitsrichtung des Pflugs 100 nach links in Fig.1, parallel zu dem eingezeichneten Pfeil an der Aufnahme 130). Weiterhin umfasst der Pflug 100 einen Pflugrahmen 120 an welchen Pflugscharen 110 befestigt sind. Der Pflugrahmen 120 bildet einen spitzen Winkel zur o.g. Arbeitsrichtung. Der Pflug 100 ist ein Wendepflug. Die Sähvorrichtung 10 umfasst weiterhin eine Datenschnittstelle 32.

An den Pflugrahmen 120 sind weiterhin zwei Befestigungen 40 angebracht, an welche wiederum die Nachbearbeitungseinheit 20 beweglich befestigt ist, welche im gezeigten Beispiel eine Recheneinheit 21 ist. Im gezeigten Beispiel ist die Recheneinheit 21 um ihre Längsachse schwenkbar zwischen den Befestigungen 40 angeordnet. Damit kann sie z.B. ausschwenken, wenn Steine durch die Pflugscharen an die Oberfläche befördert wurden sind. An der Recheneinheit 21 sind Verteiler 31 und ein mit ihnen verbundener Behälter 33 angeordnet. Die Verteiler 31 verteilen Saatgut ungerichtet und rundum im Bereich der Nachbearbeitungseinheit 20. Die Verteilung kann auch eingeschränkt werden, z.B. durch Prallplatten, sodass das Saatgut in Richtung der Pflugscharen 110 ungerichtet verteilt wird und/oder das Saatgut nicht außerhalb eines Bearbeitungsbereichs in Arbeitsrichtung der Nachbearbeitungseinheit 20 verteilt wird, so dass es bei parallelen Arbeitszügen in den Randbereichen nicht zu Saatgutanhäufungen kommt oder diese reduziert werden.

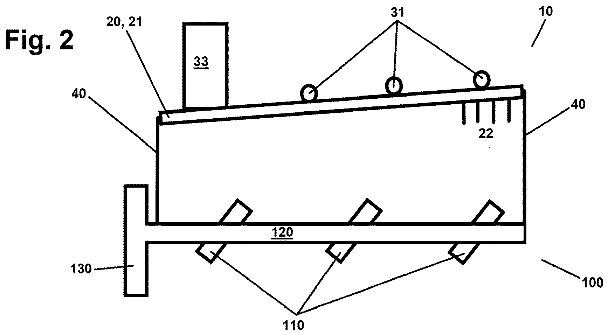

In Fig. 2 ist eine schematische Seitenansicht des Pfluges 100 mit Sähvorrichtung 10 der Fig. 1 dargestellt. Zu erkennen ist, dass der Pflug 100 im Vergleich zur Fig. 1 um 90° geschwenkt dargestellt ist, vermittels einer Drehung des Pflugrahmens 120 wie dies bei Wendepflügen bekannt ist. Weiterhin sind teilweise die Zinken 22 der Recheneinheit 21 gezeigt. Zudem ist in den beiden Figuren die Ausrichtung der Nachbearbeitungseinheit 20 in Bezug auf die Pflugscharen 110 erkennbar. Hier ist eine Ausrichtung gezeigt, die im Wesentlichen parallel zum Pflugrahmen 120 ist, jedoch nicht im präzisen mathematischen Sinne. Die in Fig. 2 links eingezeichnete Befestigung 40 ist kürzer, als die rechts eingezeichnete Befestigung 40. Jedoch können die Befestigungen 40 in ihrer Länge verstellbar sein, um z.B. die Ausrichtung der Nachbearbeitungseinheit 20 zu den Pflugscharen 110 zu verändern und/oder die Nachbearbeitungseinheit 20 für einen Straßentransport so wenig ausladend bzw. hoch wie möglich zu machen (wie z.B. in Fig. 2 gezeigt). Durch eine kürzere vordere (in Fig. 2 links) Befestigung wird die Höhe bedingt durch den Behälter 33 reduziert. Die Befestigungen 40 können beweglich (z.B. schwenkbar) an den Pflugrahmen 120 befestigt sein, oder fest mit diesem verbunden, wie in der beschriebenen Ausführungsform.

Wenn mit dem oben beschriebenen Pflug 100 z.B. ein Feld befahren wird, dann pflügen die Pflugscharen 110 auf bekannte Art und Weise den Boden um, welcher nachfolgend durch die Nachbearbeitungseinheit 20 bearbeitet wird und durch die Sähvorrichtung 10 im Bereich der Nachbearbeitungseinheit 20 Saatgut auf den Boden aufgebracht wird. Dies geschieht alles in einem Durchlauf bzw. mit einer Überfahrt des Pfluges 100, sodass nur ein Durchlauf bzw. eine Überfahrt benötigt wird.

Das Ausführungsbeispiel zeigt eine mögliche Ausführungsvariante, wobei an dieser Stelle bemerkt sei, dass die Erfindung nicht auf die speziell dargestellte Ausführungsvariante derselben eingeschränkt ist, sondern vielmehr auch diverse Kombinationen der einzeln offenbarten Merkmale möglich sind. Es müssen nicht immer alle Merkmale vorhanden sein. Diese Variationsmöglichkeit liegt aufgrund der Lehre zum technischen Handeln durch gegenständliche Erfindung im Können des auf diesem technischen Gebiet tätigen Fachmannes.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden und Dimensionen nur dort abgeleitet werden können, wo dies explizit beschrieben ist.

### Bezugszeichenliste

- 10: Sähvorrichtung
- 20: Nachbearbeitungseinheit
- 21: Recheneinheit
- 22: Zinken
- 30: Säheinheit
- 31: Verteiler
- 32: Datenschnittstelle
- 33: Behälter
- 40: Befestigungen

- 100: Plug
- 110: Pflugschar
- 120: Pflugrahmen
- 130: Aufnahme

## Patentansprüche

1. Sähvorrichtung (10) zum Anbau an einen Pflug (11) umfassend eine Nachbearbeitungseinheit (20), eine Säheinheit (30) und Befestigungen (40), wobei die Säheinheit zumindest teilweise an der Nachbearbeitungseinheit montiert ist, und wobei die Nachbearbeitungseinheit beweglich mit den Befestigungen verbunden ist.

2. Sähvorrichtung (10) nach Anspruch 1, wobei die Säheinheit (30) Verteiler (31) umfasst, welche an der Nachbearbeitungseinheit (20) angeordnet sind.

3. Sähvorrichtung (10) nach Anspruch 1 oder 2, wobei die Säheinheit (30) eine Datenschnittstelle (32) umfasst.

4. Sähvorrichtung (10) nach einem der vorangegangenen Ansprüche, wobei die Säheinheit (30) zumindest einen Verteiler (31) umfasst, welcher die Saat in den Bereich der Nachbearbeitungseinheit (20) ausbringt.

5. Sähvorrichtung (10) nach einem der vorangegangenen Ansprüche, wobei die Säheinheit (30) einen Behälter (33) umfasst, welcher an der Nachbearbeitungseinheit (20) oder an zumindest einer der Befestigungen (40) angeordnet ist.

6. Sähvorrichtung (10) nach einem der vorangegangenen Ansprüche, wobei die Nachbearbeitungseinheit (20) eine Recheneinheit (21) umfasst, und wobei die Recheneinheit mehrere Zinken (22) aufweist, die von der Recheneinheit abstehen und wobei die Recheneinheit beweglich mit den Befestigungen verbunden ist.

7. Sähvorrichtung (10) nach einem der vorangegangenen Ansprüche, wobei zumindest eine Befestigung (40) längenverstellbar ist.

8. Pflug (100) umfassend eine Sähvorrichtung (10) nach einem der vorangegangenen Ansprüche.

9. Pflug (100) nach Anspruch 8, wobei die Nachbearbeitungseinheit (20) nachlaufend zu Pflugscharen (110) angeordnet ist.

10. Pflug (100) nach Anspruch 8 oder 9, wobei die Nachbearbeitungseinheit (20) dazu vorgesehen und geeignet ist beim Drehen des Pfluges über die Pflugscharen (110) oder mit dem Pflug zu schwenken.

11. Pflug (100) nach einem der Ansprüche 8 bis 10, wobei ein Behälter (33) am Pflugrahmen (120) angeordnet ist.

12. Pflug (100) nach einem der Ansprüche 8 bis 11, wobei die Nachbearbeitungseinheit (20) zu den Pflugscharen (110) ausgerichtet ist.

13. Bodenbearbeitungsverfahren mit einem Pflug, wobei in einem Durchlauf der Boden gepflügt wird, nachbearbeitet wird und im Bereich der Nachbearbeitung Saat auf den Boden eingebracht wird.

14. Bodenbearbeitungsverfahren nach Anspruch 13, wobei die Nachbearbeitung eine Rückverfestigung umfasst.
